(19) Europäisches Patentamt
European Patent Office
Office européen des brevets

(11) **EP 3 583 403 B1**

(12) **FASCICULE DE BREVET EUROPEEN**

(45) Date de publication et mention
de la délivrance du brevet:
**18.11.2020 Bulletin 2020/47**

(21) Numéro de dépôt: **18707276.4**

(22) Date de dépôt: **13.02.2018**

(51) Int Cl.:
$G01N\ 21/27\ ^{(2006.01)}$     $G01N\ 21/31\ ^{(2006.01)}$
$G01N\ 21/3504\ ^{(2014.01)}$     $G01N\ 21/51\ ^{(2006.01)}$
$G01N\ 21/61\ ^{(2006.01)}$     $G01N\ 21/41\ ^{(2006.01)}$

(86) Numéro de dépôt international:
**PCT/EP2018/053483**

(87) Numéro de publication internationale:
**WO 2018/149799 (23.08.2018 Gazette 2018/34)**

(54) **PROCÉDÉ D'ESTIMATION DE L'INTENSITÉ D'UNE ONDE ÉMISE PAR UNE SOURCE ÉMETTRICE**

VERFAHREN ZUR SCHÄTZUNG DER INTENSITÄT EINER VON EINER EMITTIERENDEN QUELLE EMITTIERTEN WELLE

METHOD FOR ESTIMATING THE INTENSITY OF A WAVE EMITTED BY AN EMITTING SOURCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2017 FR 1751202**

(43) Date de publication de la demande:
**25.12.2019 Bulletin 2019/52**

(73) Titulaire: **Elichens**
**38000 Grenoble (FR)**

(72) Inventeur: **LE, Thanh Trung**
**38000 Grenoble (FR)**

(74) Mandataire: **INNOV-GROUP**
**310, avenue Berthelot**
**69372 Lyon Cedex 08 (FR)**

(56) Documents cités:
EP-A2- 0 729 727     FR-A1- 2 931 555
FR-A1- 3 022 633     US-A1- 2010 091 278

- RIRIS H ET AL: "KALMAN FILTERING OF TUNABLE DIODE LASER SPECTROMETER ABSORBANCE MEASUREMENTS", APPLIED OPTICS, OPTICAL SOCIETY OF AMERICA, WASHINGTON, DC; US, vol. 33, no. 24, 20 août 1994 (1994-08-20) , pages 5506-5508, XP000464026, ISSN: 0003-6935, DOI: 10.1364/AO.33.005506
- LELEUX D P ET AL: "Applications of Kalman filtering to real-time trace gas concentration measurements", APPLIED PHYSICS B: LASERS AND OPTICS, SPRINGER INTERNATIONAL, BERLIN, DE, vol. 74, no. 1, 29 novembre 2001 (2001-11-29), pages 85-93, XP036030617, ISSN: 0946-2171, DOI: 10.1007/S003400100751

## Description

## DOMAINE TECHNIQUE

Le domaine technique de l'invention est l'utilisation d'une source de lumière, en particulier de type corps noir ou corps gris, pour effectuer des mesures optiques, avec une prise en compte d'une dérive temporelle affectant le rayonnement lumineux émis par la source de lumière.

## ART ANTERIEUR

Le recours à des méthodes optiques pour l'analyse d'un gaz ou le comptage de particules est assez fréquent. Des dispositifs permettent de déterminer la composition d'un gaz en se basant sur le fait que les espèces composant un gaz présentent des propriétés spectrales d'absorption différentes les unes des autres. Ainsi, connaissant une bande spectrale d'absorption d'une espèce gazeuse, sa concentration peut être déterminée par une estimation de l'absorption de la lumière traversant le gaz, en utilisant la loi de Beer-Lambert. Ce principe permet une estimation de la concentration d'une espèce gazeuse présente dans le milieu.

La source de lumière est usuellement une source émettant dans l'infrarouge, la méthode utilisée étant usuellement désignée par le terme anglosaxon "NDIR detection", l'acronyme NDIR signifiant Non Dispersive Infra-Red. Un tel principe a été fréquemment mis en œuvre, et est par exemple décrit dans de nombreux documents, par exemple dans US5026992 ou WO2007064370.

Selon les procédés les plus courants, le gaz analysé s'étend entre une source de lumière et un photodétecteur, dit photodétecteur de mesure, ce dernier étant destiné à mesurer une onde lumineuse transmise par le gaz à analyser, et partiellement absorbée par ce dernier. Les procédés comprennent généralement une mesure d'une onde lumineuse, dite onde lumineuse de référence, émise par la source, et non absorbée par le gaz analysé. De tels procédés sont par exemple décrits dans FR2931555, US2010/091278 ou FR3022633 La comparaison entre l'onde lumineuse transmise et l'onde lumineuse de référence permet de caractériser le gaz. Il s'agit par exemple de déterminer une quantité d'une espèce gazeuse dans le gaz, selon la technologie désignée par le terme "NDIR par absorption", l'acronyme NDIR (Non Dispersive infra Red), signifiant infra-rouge non dispersif. Il peut également s'agir d'estimer une quantité de particules dans le gaz, en détectant une lumière diffusée par ce dernier selon une plage angulaire de diffusion prédéterminée.

à être disposé face à la source de lumière, sans que le gaz à analyser ne puisse s'interposer entre le photodétecteur de référence et le photodétecteur de mesure. De façon alternative, le photodétecteur de référence est disposé à côté du photodétecteur de mesure, en étant associé à un filtre optique de référence. Le filtre optique de référence définit une bande spectrale de référence, dans laquelle le gaz à analyser ne présente pas d'absorption significative. Le photodétecteur de référence peut être confondu avec le photodétecteur de mesure, pour former un même photodétecteur. Dans ce cas, le dispositif comporte un moyen d'ajustement du filtre associé au photodétecteur, de telle sorte que le photodétecteur soit associé au filtre de référence pour mesurer l'onde lumineuse de référence.

Selon d'autres procédés, on ne détermine pas une quantité d'une espèce gazeuse dans un gaz, mais une quantité de particules dans le gaz, à partir d'un rayonnement transmis ou diffusé par le gaz. Dans ce cas, un photodétecteur détecte le rayonnement transmis ou diffusé par le gaz, tandis qu'un photodétecteur de référence mesure le rayonnement émis par la source de lumière. Une comparaison entre les rayonnements détectés par le photodétecteur de mesure et le photodétecteur de référence permet d'estimer une quantité de particules présentes dans le gaz.

Plusieurs documents décrivent des dispositifs destinés à déterminer une mesure de la concentration d'un gaz, avec une application d'un filtre de Kalman appliquée à des signaux mesurés par des photodétecteurs de mesure, ou à des quantités de gaz estimées à partir de tels signaux. Par exemple, le document EP0729727 décrit un détecteur de $CO_2$, comportant un photodétecteur de mesure. Le signal détecté par le photodétecteur de mesure est traité par un filtre de Kalman. La publication Leleux "Applications of Kalman filtering to real-time trace gas concentration measurements", Appl. Phys. B 74, 85-93 (2002) décrit une application d'un filtre de Kalman à des concentrations de gaz mesurées. La publication Riris H "Kalman filtering of tunable diode laser spectrometer absorbance measurements" Appl. Optics, Vol. 33 No 24, 20 August 1994, décrit une application d'un filtre de Kalman appliqué à une grandeur formée par une quantité de gaz multipliée par une distance parcourue par un faisceau laser dans le gaz.

Les inventeurs ont proposé un perfectionnement aux procédés ou dispositifs existants. En effet, le photodétecteur de référence est affecté d'un bruit, impactant l'estimation de l'intensité de l'onde de référence. C'est notamment le cas lorsque le photodétecteur de référence est un photodétecteur simple et peu coûteux. Un tel bruit peut entraîner une incertitude sur les quantités estimées. L'invention vise à réduire cette incertitude, en limitant l'effet des fluctuations affectant les mesures réalisées par le photodétecteur de référence.

## EXPOSE DE L'INVENTION

Un premier objet de l'invention est un procédé d'analyse d'un échantillon gazeux, par comparaison entre une onde lumineuse incidente à l'échantillon et une onde lumineuse transmise par l'échantillon, le procédé comportant les étapes suivantes :

i) illumination de l'échantillon, par une source de lumière, la source de lumière émettant l'onde lumineuse incidente, se propageant jusqu'à l'échantillon ;

ii) détection, par un photodétecteur dit de mesure, d'une l'onde lumineuse transmise par l'échantillon, l'onde lumineuse transmise résultant d'une interaction de l'onde lumineuse incidente avec l'échantillon ;

iii) détection d'une onde lumineuse dite de référence par un photodétecteur de référence, l'onde lumineuse de référence étant émise par la source de lumière, l'onde lumineuse de référence étant représentative d'une onde lumineuse atteignant le photodétecteur de référence sans interaction avec l'échantillon ;

iv) réitération des étapes i) à iii) à différents instants, dits instants de mesure ;

v) à partir de chaque onde lumineuse de référence détectée lors des différentes étapes iii), à chaque instant de mesure, estimation d'une intensité de l'onde lumineuse de référence auxdits instants de mesure, en mettant en œuvre les sous-étapes suivantes :

b) estimation de l'intensité de l'onde lumineuse de référence à un instant de mesure, en fonction d'une intensité initiale ou d'une estimation de l'intensité de l'onde lumineuse de référence à un instant de mesure antérieur;

c) mesure de l'intensité de l'onde lumineuse de référence à l'instant de mesure;

d) mise à jour de l'estimation de l'intensité de l'onde à l'instant de mesure, en fonction de l'intensité mesurée lors de la sous-étape c) et de l'intensité estimée lors de la sous-étape b) ;

e) réitération des sous-étapes b) à d), sur la base de l'estimation de l'intensité obtenue lors de la sous-étape d), en incrémentant l'instant de mesure ;

vi) prise en compte de l'intensité de l'onde lumineuse de référence estimée, à chaque instant de mesure, résultant de l'étape v), et d'une intensité de l'onde lumineuse transmise détectée lors de l'étape ii) pour effectuer une comparaison, à chaque instant de mesure, entre l'onde lumineuse de référence (ou l'onde lumineuse incidente) et l'onde lumineuse transmise par l'échantillon ;

vii) analyse de l'échantillon en fonction de la comparaison effectuée dans l'étape vi).

Par échantillon, on entend un échantillon gazeux, liquide ou solide que l'on souhaite analyser suite à la comparaison. L'onde lumineuse transmise peut notamment résulter d'une diffusion ou d'une absorption ou d'une diffraction ou d'une réfraction de l'onde lumineuse incidente par l'échantillon.

L'onde lumineuse de référence est représentative d'une onde lumineuse émise par la source de lumière et atteignant le photodétecteur de référence sans interaction avec l'échantillon, ou sans interaction significative avec l'échantillon. Elle peut être considérée comme représentative de l'onde lumineuse incidente.

L'étape v) peut comprendre une sous-étape a) de détermination d'une intensité initiale de l'onde lumineuse de référence. La sous-étape a) peut comprendre une détection, par le capteur, de l'onde émise par la source émettrice durant une période d'initialisation. La sous-étape a) peut comprendre les phases suivantes :

ai) détection de l'onde émise par la source émettrice à une pluralité d'instants dits préliminaires, durant la période d'initialisation et mesure de l'intensité de l'onde détectée à chaque instant préliminaire;

aii) détermination de l'intensité initiale à partir d'une moyenne ou d'une médiane des intensités mesurées lors de la phase ai).

La sous-étape b) peut comporter l'estimation d'un vecteur d'état, à chaque instant de mesure, le vecteur d'état comportant une estimation de l'intensité de l'onde détectée audit instant de mesure. Le vecteur d'état peut également comporter un terme représentant une estimation de la dérive de l'intensité lumineuse entre deux instants de mesure successifs. La sous-étape b) peut alors comporter une estimation du vecteur d'état à chaque instant de mesure, en appliquant une matrice de prédiction au vecteur d'état déterminé à un instant précédant l'instant de la mesure ou à un vecteur d'état initial. Le procédé peut comporter une détermination d'un vecteur d'état initial.

La sous-étape d) peut comporter les phases suivantes :

di) comparaison entre la mesure de l'intensité réalisée lors de la sous-étape c) précédant ladite sous-étape d) et l'estimation réalisée au cours de la sous-étape b) précédant ladite sous-étape d) ;

dii) mise à jour du vecteur d'état en fonction de ladite comparaison.

Les sous-étapes b) à d) sont de préférence mises en œuvre à l'aide d'un estimateur récursif, de type filtre de Kalman.

L'échantillon peut être apte à atténuer une partie de l'onde lumineuse incidente, auquel cas le procédé comporte, lors de l'étape vi), un calcul d'un ratio entre l'intensité de l'onde lumineuse de référence estimée et de l'intensité de l'onde lumineuse transmise. Un tel ratio peut notamment correspondre à une atténuation de l'onde lumineuse incidente par l'échantillon. L'échantillon peut comporter une espèce gazeuse apte à atténuer une partie de l'onde lumineuse incidente, le procédé comportant, lors de l'étape vii), une estimation d'une quantité de ladite espèce gazeuse dans l'échantillon, à chaque instant de mesure, à partir du ratio déterminé lors de l'étape vi) audit instant de mesure.

Un deuxième objet de l'invention est un dispositif pour analyser un échantillon gazeux, le dispositif comportant :

- une source lumineuse apte à émettre une onde lumineuse incidente se propageant vers l'échantillon ;
- un photodétecteur de mesure, apte à détecter une onde lumineuse transmise par l'échantillon, à différents instants de mesure, l'onde lumineuse transmise résultant d'une interaction de l'onde lumineuse incidente avec l'échantillon ;
- un photodétecteur de référence, configuré pour détecter une onde lumineuse de référence représentative de l'onde lumineuse incidente, aux différents instants de mesure ;
- un premier processeur, pour estimer une intensité de l'onde lumineuse de référence aux différents instants de mesure, à partir de l'onde lumineuse de référence détectée par le photodétecteur de référence auxdits instants de mesure, le premier processeur étant configuré pour mettre en œuvre l'étape v) du premier objet de l'invention ;
- un deuxième processeur pour comparer, à chaque instant de mesure, l'onde lumineuse de référence et l'onde lumineuse transmise par l'échantillon, aux différents instants de mesure, à partir de l'intensité de l'onde lumineuse de référence estimée par le premier processeur à chaque instant de mesure, et de l'intensité de l'onde lumineuse transmise détectée par le photodétecteur de mesure, le deuxième processeur étant programmé pour mettre en œuvre l'étape vi) du premier objet de l'invention.

L'onde transmise peut notamment résulter d'une absorption, d'une atténuation, ou d'une diffusion ou d'une réfraction de l'onde lumineuse incidente dans l'échantillon.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

**FIGURES**

La figure 1A représente un dispositif permettant la mise en œuvre de l'invention. La figure 1B illustre la forme temporelle d'une impulsion lumineuse produite par la source de lumière du dispositif. La figure 1C montre une évolution de l'intensité lumineuse de plusieurs impulsions successives de la source de lumière.

La figure 2A illustre les principales étapes d'un mode de réalisation de l'invention. La figure 2B montre les sous-étapes d'une étape de la figure 2A.

La figure 3A montre le résultat d'un essai expérimental, comparant, à différents instants successifs, la mesure d'une intensité d'une onde lumineuse de référence et son estimation par le procédé de l'invention.

La figure 3B illustre une estimation de la dérive de l'intensité lumineuse de référence au cours de l'essai expérimental.

La figure 3C montre un autre résultat d'un essai expérimental, comparant, à différents instants successifs, la mesure d'une intensité d'une onde lumineuse de référence et son estimation par le procédé de l'invention. Ce résultat a été obtenu en considérant une fréquence d'acquisition des mesures inférieure à celle permettant l'obtention des données représentées sur la figure 3A.

La figure 4 illustre les principales étapes d'un procédé d'estimation d'une atténuation lumineuse pour estimer une quantité d'une espèce gazeuse dans un échantillon.

**EXPOSE DE MODES DE REALISATION PARTICULIERS**

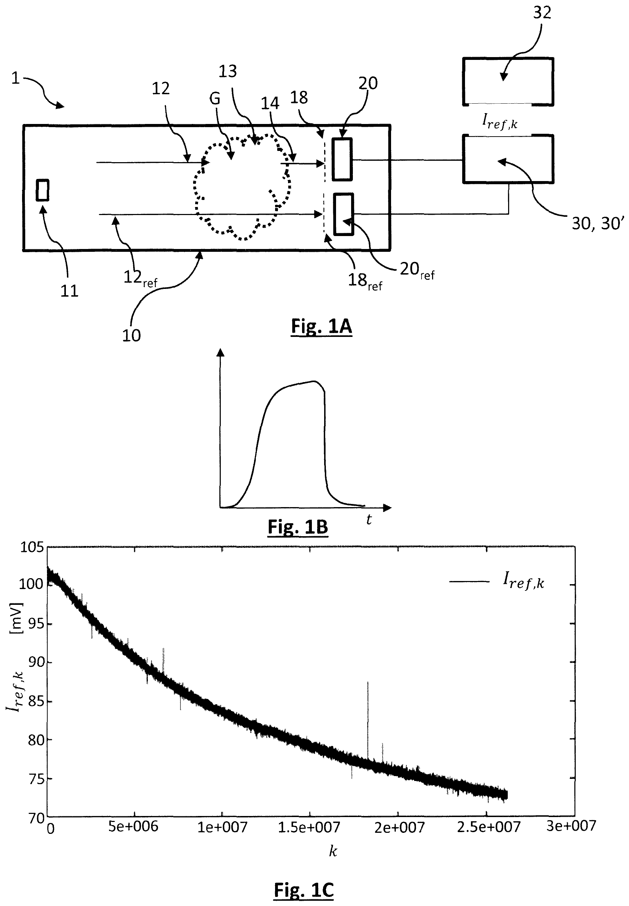

La figure 1A est un exemple d'un dispositif d'analyse 1 de gaz. Ce dispositif comporte une enceinte 10 définissant un espace interne à l'intérieur duquel se trouvent :

- une source de lumière 11, apte à émettre une onde lumineuse 12, dite onde lumineuse incidente, de façon à illuminer un gaz G s'étendant dans l'espace interne, le gaz formant un échantillon 13 ;
- un photodétecteur 20, dit photodétecteur de mesure, apte à détecter une onde lumineuse 14 transmise par l'échantillon 13, sous l'effet de l'illumination de ce dernier par l'onde lumineuse incidente 12.

Le gaz G peut être un mélange gazeux comportant une pluralité d'espèces gazeuse $G_1...G_S...G_S$, S étant un entier positif quantifiant le nombre d'espèces gazeuses différentes présentes dans le gaz G.

La source de lumière 11 est apte à émettre l'onde lumineuse incidente 12, selon une bande spectrale d'illumination $\Delta$, cette dernière pouvant s'étendre entre le proche ultraviolet et l'infrarouge moyen, entre 200 nm et 10 $\mu$m, et le plus souvent entre 1 $\mu$m et 10 $\mu$m. La source de lumière 11 peut notamment être impulsionnelle, l'onde lumineuse incidente 12 étant une impulsion de durée généralement comprise entre 100 ms et 1 s, telle que représentée sur la figure 1B. Il peut notamment s'agir d'une source de lumière de type filament suspendu et chauffé à une température comprise entre 400°C et 800°C.

Dans l'exemple considéré, le photodétecteur est une thermopile, apte à délivrer un signal dépendant de l'intensité de l'onde lumineuse à laquelle est exposé le photodétecteur. Il peut également d'agir d'une photodiode ou d'un autre type de photodétecteur.

Le dispositif peut comporter un filtre 18 passe-bande, dont la bande spectrale correspond à une bande spectrale d'une espèce gazeuse $G_s$ dont on souhaite déterminer une quantité $C_{s,k}$ dans le mélange gazeux, à un instant de mesure $k$. L'intensité $I_k$ de l'onde lumineuse 14 détectée par le photodétecteur de mesure 20, à l'instant de mesure $k$ dépend de la quantité $C_{s,k}$ selon la relation de Beer Lambert :

$$att_k = \frac{I_k}{I_{0,k}} = e^{-\mu(C_{s,k})l} \quad (1)$$

où :

- $\mu(C_{s,k})$ est un coefficient atténuation, dépendant de la quantité $C_{s,k}$ recherchée;
- $l$ est l'épaisseur de gaz traversé par l'onde lumineuse incidente 12 ;
- $I_{0,k}$ est l'intensité de l'onde lumineuse incidente 12 à l'instant de mesure $k$.

La comparaison entre $I_k$ et $I_{0,k}$, prenant la forme d'un ratio $\frac{I_k}{I_{0,k}}$, correspond à une atténuation $att_k$ de l'onde lumineuse incidente 12 par l'échantillon 13 à l'instant de mesure $k$.

Lors de chaque impulsion de la source de lumière 11, on peut ainsi déterminer $\mu(C_{s,k})$, ce qui permet d'estimer $\hat{C}_{s,k}$ sachant que la relation entre $C_{s,k}$ et $\mu(C_{s,k})$ est connue.

L'expression (1) suppose une maîtrise de l'intensité $I_{0,k}$ de l'onde lumineuse incidente 12 à l'instant de mesure $k$. A cet effet, le dispositif comporte un photodétecteur de référence $20_{ref}$, agencé de telle sorte qu'il détecte une onde lumineuse, dite onde lumineuse de référence $12_{ref}$, représentative de l'onde lumineuse incidente 12. L'onde lumineuse de référence atteint le photodétecteur de référence sans interagir avec l'échantillon 13, ou sans interagir significativement avec ce dernier. L'intensité de l'onde lumineuse de référence $12_{ref}$, détectée par le photodétecteur de référence $20_{ref}$, à l'instant de mesure $k$, est désignée par le terme intensité de référence $I_{ref,k}$.

Dans cet exemple, le photodétecteur de référence $20_{ref}$ est disposé à côté du photodétecteur de mesure 20. Il est associé à un filtre optique, dit filtre optique de référence $18_{ref}$. Le filtre optique de référence $18_{ref}$ définit une bande passante correspondant à une plage de longueurs d'onde non absorbées par l'échantillon. La bande passante de référence est par exemple centrée autour de la longueur d'onde 3.91 nm. Les différentes configurations décrites dans l'art antérieur peuvent également être envisagées, en particulier les variantes selon lesquelles :

- le photodétecteur de référence $20_{ref}$ est disposé dans une enceinte isolée du gaz à analyser ;
- le photodétecteur de référence $20_{ref}$ est confondu avec le photodétecteur de mesure 20, un moyen d'ajustement de filtre permettant d'associer le photodétecteur alternativement au filtre de mesure 18 et au filtre de référence $18_{ref}$. Il peut par exemple s'agir d'une roue à filtres.

Dans les dispositifs de l'art antérieur, la mesure de $I_{ref,k}$ permet d'utiliser l'expression (1) en estimant $I_{0,k}$ à partir de $I_{ref,k}$ ce qui permet de déterminer $\mu(C_{s,k})$, puis d'estimer $\hat{C}_{s,k}$.

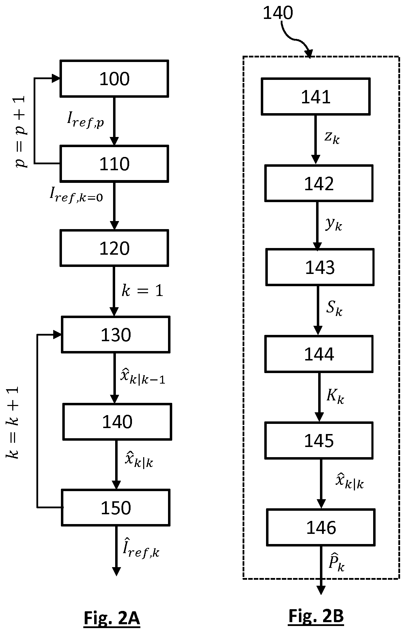

Le dispositif comporte un premier processeur 30, par exemple un microprocesseur ou un microcontrôleur. Ce dernier est configuré pour recevoir un signal représentatif d'une intensité $I_{ref,k}$ de l'onde lumineuse de référence $12_{ref}$, mesurée par le photodétecteur de référence $20_{ref}$ à chaque instant de mesure $k$, et pour mettre en œuvre un procédé afin d'estimer l'intensité de l'onde lumineuse de référence, telle que décrit par la suite, en lien avec les figures 2A et 2B. Le premier processeur 30 est relié à une mémoire 32 comportant des instructions permettant la mise en œuvre de certaines étapes de ce procédé.

Le dispositif comporte également un deuxième processeur 30' configuré pour recevoir un signal représentatif d'une intensité $I_k$ de l'onde 14 transmise par l'échantillon 13, cette intensité étant mesurée par le photodétecteur de mesure 20. Le deuxième processeur est programmé pour déterminer, à chaque instant de mesure, une grandeur représentative de l'atténuation $att_k$ de l'onde incidente 12 par l'échantillon 13. Le premier processeur 30 et le deuxième processeur 30' peuvent être confondus.

Il est connu que l'émissivité des sources de lumière, de type corps noir et corps gris, varie avec le temps, et peut notamment subir une décroissance. Le recours à un photodétecteur de référence telle que précédemment décrit est donc nécessaire pour prendre en compte cette variation temporelle. La figure 1C montre une évolution temporelle de l'intensité $I_{ref,k}$ de chaque impulsion lumineuse, détectée par un photodétecteur de référence, à différents instants $k$, entre un instant $k = 0$ et un instant $k = K$, avec $K = 2.6 \; 10^7$. L'indice $k$ est un indice temporel, et désigne une impulsion émise à un instant de mesure $k$. L'intervalle temporel séparant deux instants de mesure successifs $k$ et $k+1$ est, dans cet exemple, de 1s. Cette courbe a été obtenue par une mesure, par un photodétecteur de référence, de l'évolution de l'intensité émise par une source de lumière selon une période temporelle de $2.6 \; 10^7$ secondes, soit 7220 heures, soit environ 300 jours. Cette mesure a été effectuée par une thermopile Heimann Sensor, référence HCM Cx2 Fx, faisant office de photodétecteur de référence $20_{ref}$.

Chaque impulsion de la source de lumière a une forme temporelle similaire à celle représentée sur la figure 1B. Ainsi, au cours d'une impulsion, l'intensité de l'impulsion est variable et a une forme proche d'un créneau. L'intensité de chaque impulsion peut être obtenue en considérant la valeur maximale ou la valeur moyenne d'une telle impulsion. Dans le cas présent, l'intensité $I_{ref,k}$ correspond à la valeur moyenne de l'intensité de chaque impulsion. Les mesures représentées sur la figure 1C ont été effectuées en considérant une fréquence impulsionnelle de 1 Hz, la durée de chaque impulsion étant égale à 300 ms. On observe que l'intensité de référence décroît peu à peu, entre une valeur initiale $I_{ref,k=0}$ d'environ 101 mV à une valeur finale $I_{ref,k=K}$ d'environ 72 mV. On observe également des fluctuations importantes de l'intensité de référence mesurée. Ces fluctuations sont essentiellement dues au bruit de détection du photodétecteur, en l'occurrence de la thermopile. Les intensités des impulsions sont ici exprimées selon une unité de tension, correspondant à la tension aux bornes de la thermopile.

En prenant en compte l'intensité de référence dans l'équation (1), c'est-à-dire en estimant $I_{0,k}$, à partir de $I_{ref,k}$, l'estimation $\hat{C}_{s,k}$ de la quantité de l'espèce gazeuse recherchée est affectée par les fluctuations de la mesure de l'intensité de référence $I_{ref,k}$. Autrement dit, les fluctuations affectant la détermination de l'intensité de référence $I_{ref,k}$ se propagent à l'estimation $\hat{C}_{s,k}$, ce qui entraîne une incertitude affectant l'estimation de la quantité de l'espèce gazeuse recherchée.

L'invention vise à atténuer les fluctuations affectant la détermination de l'intensité de référence $I_{ref,k}$, et à prendre en compte la décroissance progressive de cette intensité au cours du temps. Pour cela, elle se base non pas sur une mesure de l'intensité de référence $I_{ref,k}$, mais sur une estimation $\hat{I}_{ref,k}$ de cette dernière, se basant sur une observation ainsi que sur un modèle prédictif itératif. L'estimation $\hat{I}_{ref,k}$ peut notamment être obtenue, à chaque instant $k$, en mettant en œuvre un estimateur récursif. Un tel estimateur peut par exemple être un filtre de Kalman, dont les principales étapes, illustrées sur la figure 2A, sont décrites ci-dessous.

Etape 100 : mesures d'initialisation. Au cours de cette étape, la source de lumière 11 est activée et on mesure une intensité, dite intensité préliminaire, $I_{ref,p}$, d'une ou de plusieurs impulsions, à l'aide du photodétecteur de référence $20_{ref}$. L'indice $p$ désigne le rang des itérations d'initialisation : il est compris entre 1 et $P$, $P$ étant un entier positif, supérieur ou égal à 1. $P$ est par exemple égal à 30.

Etape 110 : détermination de valeurs d'initialisation. Au cours de cette étape, on réitère une mesure d'initialisation (étape 100) tant que $p < P$. Lorsque la condition de fin d'itération est atteinte ($p = P$), on détermine une intensité lumineuse de référence initiale $I_{ref,k=0}$ à partir des différentes intensités $I_{ref,p}$ préliminaires mesurées. Cette détermination peut être effectuée en utilisant une moyenne, selon l'expression :

$$I_{ref,k=0} = \underset{p}{mean}\big(I_{ref,p}\big) \ (2) ,$$

où *mean* désigne l'opérateur moyenne.

On détermine également une variance initiale

$$var_{ref,k=0} = \underset{p}{var}\big(I_{ref,p}\big) \ (3),$$ où *var* désigne l'opérateur variance.

Au cours de cette étape, on détermine également un vecteur d'état initial, $x_{k=0} = \begin{pmatrix} I_{ref,k=0} \\ 0 \end{pmatrix}$

De façon alternative, l'intensité initiale $I_{ref,k=0}$ peut être établie arbitrairement ou affectée à une valeur déterminée lors de tests suivant la fabrication de la source.

Etape 120 : prise en compte d'un premier instant de mesure ($k = 1$) et début du procédé itératif. Suite à la phase d'initialisation, regroupant les étapes 100 et 110, l'indice temporel d'itération $k$, représentant le rang d'itération du procédé récursif, est initialisé et prend la valeur $k = 1$.

A chaque instant $k$, l'onde lumineuse de référence $12_{ref}$ peut être représentée par un vecteur d'état

$$x_k = \begin{pmatrix} I_{ref,k} \\ d_k \end{pmatrix},$$ où :

- $I_{ref,k}$ représente l'intensité lumineuse de référence à l'instant $k$ ;
- $d_k$ représente une dérive de l'intensité lumineuse de référence à l'instant $k$. La dérive $d_k$ correspond à une comparaison de l'intensité de l'onde lumineuse de référence entre deux instants successifs $k$ et $k - 1$.

Lors de l'établissement du vecteur d'état initial $x_{k=0}$, le premier terme du vecteur $I_{ref,k=0}$ correspond à l'intensité initiale tandis que le deuxième terme du vecteur correspond à une valeur arbitraire de la dérive, cette valeur étant par exemple 0.

Deux vecteurs d'état successifs $x_{k-1}$, $x_k$ sont liés par les équations d'évolution d'état suivantes:

- $$I_{ref,k} = I_{ref,k-1} + d_k + w_k^1 \ (4)$$
- $$d_k = d_{k-1} + w_k^2 \ (5)$$

où $w_k^1$ et $w_k^2$ sont des termes de bruit suivant des lois normales de moyenne nulle et de variances respectivement égales à $var(w_k^1)$ et $var(w_k^2)$

Chaque itération vise à estimer un vecteur d'état $\hat{x}_k = \hat{x}_{k|k}$, représentatif de l'intensité lumineuse de référence à l'instant $k$, de telle sorte que $\hat{x}_k = \begin{pmatrix} \hat{I}_{ref,k} \\ \hat{d}_k \end{pmatrix}$. Le symbole ^ désigne une grandeur estimée.

Etape 130 : estimation. A partir d'une estimation de l'intensité de référence $I_{ref,k-1}$ résultant d'une itération précédente $k - 1$, estimation d'une intensité de référence à l'instant $k$. Lors de la première itération ($k = 1$), l'estimation se base sur l'intensité de référence initiale

$I_{ref,k=0}$, obtenue lors de l'étape 110. L'estimation est obtenue par l'équation d'estimation suivante :
$\hat{x}_{k|k-1} = A. \hat{x}_{k-1|k-1}$ (6). $A$ est une matrice de prédiction, reliant vecteur d'état résultant de l'itération précédente $\hat{x}_{k-1|k-1}$ à l'estimation du vecteur d'état à l'instant $k$. Dans cet exemple, la matrice de prédiction $A$ est telle que :

$$ A = \begin{bmatrix} 1 & 1 \\ 0 & 1 \end{bmatrix} $$

Cette étape comporte aussi l'estimation $\hat{P}_{k|k-1}$ d'une matrice de covariance de l'erreur selon l'expression : $\hat{P}_{k|k-1} = A.P_{k-1}.A^T + Q$ (7)

- $\hat{P}_k$ est une matrice de covariance de l'erreur estimée à l'instant $k$ ;
- $T$ désigne l'opérateur transposée;
- $A$ est la matrice de prédiction décrite en lien avec l'équation (6) ;
- $Q$ est une matrice de covariance de bruit du processus.

La matrice de covariance de bruit du processus

$$ Q = \begin{bmatrix} var(w_k^1) & 0 \\ 0 & var(w_k^2) \end{bmatrix} $$

$Q$ est telle que: avec
$var(w_k^1) = var(w_k^2) = 1\ 10^{-5}$.

Etape 140 : Mise à jour.
L'étape de mise à jour comporte les sous-étapes suivantes, décrites en lien avec la figure 2B :

- Sous-étape 141 : observation. On effectue une mesure de l'intensité de référence $I_{ref,k}$ à l'instant $k$, à partir de laquelle on détermine une grandeur $z_k$, dite d'observation, telle que :
  $z_k = I_{ref,k} + v_k$ (8) où $v_k$ est un terme de bruit, suivant une loi normale de moyenne nulle et de variance égale à $var_{ref,k=0}$, définie en lien avec l'équation (3).
- Sous-étape 142 : détermination d'une innovation $y_k$, selon l'expression suivante :
  $y_k = z_k - C.\hat{x}_{k|k-1}$ (9) avec $C = [1\ 0].\hat{x}_{k|k-1}$ résulte de l'étape 130.
- Sous-étape 143 : détermination d'une covariance de l'innovation $S_k$ avec :
  $S_k = C.\hat{P}_{k|k-1}.C^T + R$ (10), $R$ étant égal à la variance déterminée lors de la phase d'initialisation selon l'équation (3).
- Sous-étape 144 : calcul du gain
  $$ K_k : K_k = \hat{P}_{k|k-1}.C^T.S_k^{-1} \ (11) $$
- Sous-étape 145 : mise à jour du vecteur d'état : $\hat{x}_k = \hat{x}_{k|k} = \hat{x}_{k|k-1} + K_k.y_k$ (12)
- Sous-étape 146 : mise à jour de la matrice de covariance de l'erreur :
  $\hat{P}_k = (I - K_k.C). \hat{P}_{k|k-1}$ (13). $I$ est la matrice identité de dimension (2, 2).

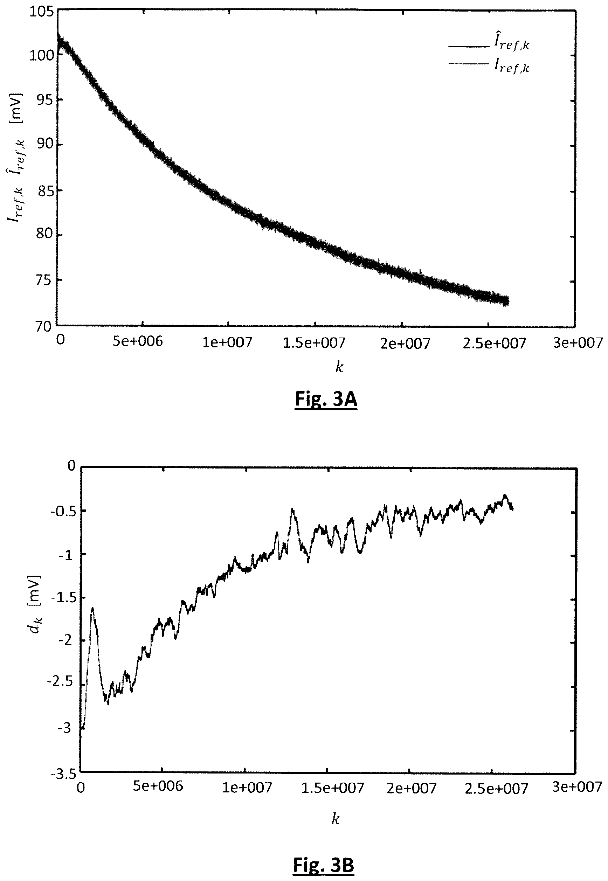

Etape 150 : réitération : L'indice temporel d'itération $k$ est incrémenté et le processus itératif repart de l'étape 130, sur la base des estimations $\hat{x}_{k|k}$ et $\hat{P}_k$ obtenues respectivement lors des sous-étapes 145 et 146.
Chaque estimation du vecteur d'état $\hat{x}_{k|k}$ permet d'obtenir une estimation de l'intensité de l'onde lumineuse de référence $\hat{I}_{ref,k}$, ainsi qu'une estimation $\hat{d}_k$ de la dérive à chaque instant de mesure $k$. Les figures 3A et 3B montrent respectivement les estimations $\hat{I}_{ref,k}$ et $\hat{d}_k$ obtenues en se basant sur une évolution de l'intensité de lumineuse de référence $12_{ref}$ telle que représentée sur la figure 1C. On observe que les estimations $\hat{I}_{ref,k}$ sont nettement moins affectées par le bruit mesuré en effectuant une mesure de $I_{ref,k}$. En effet, la courbe représentant l'évolution temporelle de l'estimation $\hat{I}_{ref,k}$ est nettement moins soumise aux fluctuations temporelles que les mesures $I_{ref,k}$. Cela provient du fait que le filtre de Kalman prend en compte la variance du bruit du photodétecteur de référence, cette dernière étant notamment "apprise" lors de la période d'initialisation, à l'aide des mesures préliminaires. Le procédé permet ainsi d'estimer l'intensité de l'onde lumineuse de référence en limitant, voire éliminant, les fluctuations causées par le photodétecteur de référence $12_{ref}$. Cette estimation permet de prendre en compte la variation temporelle de l'intensité de référence, du fait de la décroissance de l'émissivité de la source de lumière 11. Cela permet d'obtenir une estimation de la quantité d'espèce gazeuse $\hat{C}_{s,k}$ moins soumise aux fluctuations du photodétecteur de référence $12_{ref}$, tout en prenant en compte la variation de l'émissivité de la source de lumière 11.

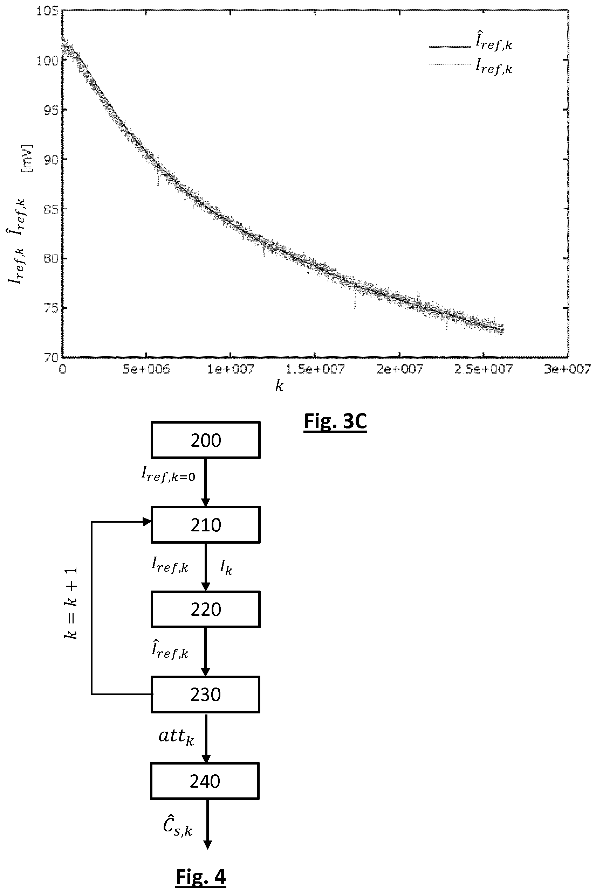

La figure 3C montre des résultats issus d'une autre simulation, au cours de laquelle la fréquence d'acquisition est sous-échantillonnée d'un facteur 1000 par rapport à la simulation représentée sur la figure 3A. L'évolution temporelle des mesures $I_{ref,k}$ est toujours soumise à d'importantes fluctuations, tandis que l'évolution temporelle de l'estimation $\hat{I}_{ref,k}$ est nettement moins bruitée.
On va à présent décrire, en lien avec la figure 4, les principales étapes d'un procédé d'estimation de l'atténuation d'une onde lumineuse incidente produite par une source de lumière, en lien avec l'application illustrée sur la figure 1A. Au cours d'une première étape 200 d'initialisation, des données d'initialisation sont obtenues. Cette étape englobe la phase d'initialisation décrite ci-dessus (étapes 100 et 110). Suite à cette phase d'initialisation, le procédé comporte les étapes suivantes :

Etape 210 : activation de la source de lumière 11 à un instant k et mesure de l'intensité $I_k$ de l'onde lumineuse 14 transmise par le gaz présent dans l'échantillon, à l'aide du photodétecteur de mesure 20. De façon simultanée, on mesure l'onde lumineuse de référence $12_{ref}$ à l'aide du photodétecteur de référence $20_{ref}$, ce qui permet d'obtenir une mesure de l'intensité de référence $I_{ref,k}$ .

Etape 220 : à partir de l'onde lumineuse de référence $\overline{I}_{ref,k}$ mesurée à l'instant $k$, on met en œuvre une itération du procédé d'estimation récursif décrit en lien avec les étapes 130 à 150. Cela permet notamment d'obtenir une estimation de l'intensité de référence $\hat{I}_{ref,k}$ à l'instant $k$. Cette estimation est mise en œuvre par le premier processeur 30, par exemple un microcontrôleur.

Etape 230 : prise en compte de l'intensité de référence $\hat{I}_{ref,k}$ estimée lors de l'étape 220 avec l'intensité $I_k$ mesurée lors de l'étape 210 pour obtenir une atténuation $att_k$ de l'onde incidente 12 par l'échantillon. Cette comparaison peut être mise en œuvre par le deuxième processeur 30', par exemple un microprocesseur relié au premier processeur 30.

Le procédé peut comporter une étape 240 de détermination d'une quantité $\hat{C}_{s,k}$ d'une espèce gazeuse $G_s$ à partir de l'atténuation $att_k$ obtenue à l'issue de l'étape 230, comme précédemment décrit en lien avec l'équation (1).

Les étapes 210 à 230, voire 240, peuvent être réitérées au cours de différents instants de mesure $k$.

L'invention ne se limite pas à l'estimation d'une intensité lumineuse émise par une source de lumière, et peut s'appliquer à d'autres types de sources émettrices d'une onde. Il peut par exemple s'agir d'une source de rayonnement électromagnétique ionisant, par exemple une source de rayons X, ou une source d'une onde acoustique, par exemple de type transducteur piézoélectrique. Les applications visées concernent ainsi le contrôle non destructif ou les applications d'imagerie médicale. L'invention trouvera notamment son application lorsqu'on souhaite disposer d'une estimation de l'intensité de référence émise par la source émettrice, cette intensité de référence correspondant à une onde émise par la source émettrice et se propageant vers un échantillon à examiner. L'intérêt est de s'affranchir des fluctuations dues à la détection, par un capteur, de l'onde de référence. Il est alors possible de comparer une intensité d'une onde ayant interagi avec l'échantillon, par réflexion, transmission, diffusion, ou réfraction avec l'onde de référence estimée en mettant en oeuvre l'invention. La comparaison permet une analyse de l'échantillon, par exemple une quantité d'éléments diffusants.

Lorsque la source émettrice est une onde lumineuse, l'intérêt de l'invention est de permettre une estimation non bruitée de l'intensité d'une onde lumineuse incidente à un échantillon examiné. L'échantillon examiné peut interagir avec l'onde lumineuse incidente en l'absorbant partiellement, comme décrit dans l'exemple détaillé, ou encore en la diffusant ou en la réfractant. La comparaison entre l'intensité de l'onde de référence et l'intensité de l'onde diffusée, absorbée ou réfractée permet d'estimer une propriété de l'objet, en particulier une teneur en une espèce particulière ou un indice de réfraction.

**Revendications**

1.    Procédé d'analyse d'un échantillon gazeux (13), par comparaison entre une onde lumineuse incidente (12) à l'échantillon et une onde lumineuse (14) transmise par l'échantillon, le procédé comportant les étapes suivantes :

    i) illumination de l'échantillon (13), par une source de lumière (11), la source de lumière émettant l'onde lumineuse incidente (12), se propageant jusqu'à l'échantillon ;
    ii) détection, par un photodétecteur dit de mesure (20), d'une onde lumineuse transmise (14) par l'échantillon, l'onde lumineuse transmise résultant d'une interaction de l'onde lumineuse incidente avec l'échantillon ;
    iii) détection d'une onde lumineuse dite de référence ($12_{ref}$) par un photodétecteur de référence ($20_{ref}$), l'onde lumineuse de référence ($12_{ref}$) étant émise par la source de lumière (11), l'onde lumineuse de référence étant représentative d'une onde lumineuse atteignant le photodétecteur de référence sans interaction avec l'échantillon ;
    iv) réitération des étapes i) à iii) à différents instants ($k$), dits instants de mesure ;

    le procédé étant **caractérisé en ce qu'**il comporte également :

    v) à partir de chaque onde lumineuse de référence ($12_{ref}$) détectée lors des différentes étapes iii), à chaque instant de mesure, estimation d'une intensité ($\hat{I}_{ref,k}$) de l'onde lumineuse de référence ($12_{ref}$) auxdits instants de mesure, en mettant en œuvre les sous-étapes suivantes :

    b) estimation de l'intensité de l'onde lumineuse de référence ($\hat{I}_{ref,k|k-1}$) à un instant de mesure ($k$), en fonction d'une intensité initiale ($I_{ref,k=0}$) ou d'une estimation de l'intensité ($\hat{I}_{ref,k-1}$) de l'onde lumineuse de référence à un instant de mesure antérieur ($k-1$);
    c) mesure de l'intensité ($I_{ref,k}$) de l'onde de référence (12) détectée à l'instant de mesure;
    d) mise à jour de l'estimation de l'intensité de l'onde lumineuse de référence ($\hat{I}_{ref,k}$) à l'instant de mesure, en fonction de l'intensité ($I_{ref,k}$) mesurée lors de la sous-étape c) et de l'intensité ($\hat{I}_{ref,k|k-1}$) estimée lors de la sous-étape b) ;

e) réitération des étapes b) à d), sur la base de l'estimation de l'intensité de l'onde lumineuse de référence ($\hat{I}_{ref,k}$) obtenue lors de la sous-étape d), en incrémentant l'instant de mesure

vi) prise en compte de l'intensité de l'onde lumineuse de référence estimée ($\hat{I}_{ref,k}$), à chaque instant de mesure, résultant de l'étape v), et d'une intensité ($I_k$) de l'onde lumineuse transmise (14) détectée lors de l'étape ii) pour effectuer une comparaison ($att_k$), à chaque instant de mesure, à partir de l'onde lumineuse de référence ($12_{ref}$) et de l'onde lumineuse transmise (14) par l'échantillon (13);

vii) analyse de l'échantillon gazeux (13) en fonction de la comparaison effectuée dans l'étape vi)

2. Procédé selon la revendication 1, dans lequel l'étape v) comporte une sous-étape a) de détermination d'une intensité initiale ($I_{ref,k=0}$) de l'onde lumineuse de référence ($12_{ref}$).

3. Procédé selon la revendication 2, dans lequel la sous-étape a) comporte une détection, par le photodétecteur de référence ($20_{ref}$), de l'onde lumineuse de référence ($12_{ref}$) durant une période d'initialisation.

4. Procédé selon la revendication 3, dans lequel la sous-étape a) comporte les phases suivantes:

ai) détection de l'onde lumineuse de référence ($12_{ref}$) à une pluralité d'instants dits préliminaires ($p$), durant la période d'initialisation et mesure de l'intensité ($I_p$) de l'onde lumineuse de référence détectée à chaque instant préliminaire;

aii) détermination de l'intensité initiale ($I_{ref,k=0}$) à partir d'une moyenne ou d'une médiane des intensités mesurées lors de la phase ai).

5. Procédé d'estimation selon l'une quelconque des revendications précédentes, dans lequel la sous-étape b) comporte l'estimation d'un vecteur d'état ($\hat{x}_k$), à chaque instant de mesure ($k$), le vecteur d'état comportant une estimation ($\hat{I}_{ref,k}$) de l'intensité de l'onde lumineuse de référence détectée audit instant de mesure.

6. Procédé d'estimation selon la revendication 5, dans lequel le vecteur d'état ($\hat{x}_k$) comporte également un terme ($\hat{d}_k$) représentant une estimation d'une dérive de l'intensité de l'onde lumineuse de référence entre deux instants de mesure successifs.

7. Procédé d'estimation selon l'une quelconque des revendications 5 ou 6, dans lequel la sous-étape b) comporte une estimation du vecteur d'état ($\hat{x}_k$) à chaque instant de mesure, en appliquant une matrice de prédiction (A) au vecteur d'état ($\hat{x}_{k-1}$) déterminé à un instant précédant l'instant de mesure.

8. Procédé d'estimation selon l'une quelconque des revendications 5 à 7, dans lequel la sous-étape d) comporte les phases suivantes :

di) comparaison entre la mesure de l'intensité de référence ($I_{ref,k}$) réalisée lors de la sous-étape c) précédant la sous-étape d) et l'estimation ($\hat{I}_{ref,k|k-1}$) réalisée au cours de la sous-étape b) précédant la sous-étape d) ;

dii) mise à jour du vecteur d'état ($\hat{x}_k$) en fonction de ladite comparaison.

9. Procédé selon l'une quelconque des revendications 5 à 8, dans lequel les sous-étapes b) à d) sont mises en œuvre à l'aide d'un estimateur récursif de type filtre de Kalman.

10. Procédé selon l'une quelconque des revendications précédentes, dans lequel l'échantillon (13) est apte à atténuer une partie de l'onde lumineuse incidente (12), le procédé comportant, lors de l'étape vi), un calcul d'un ratio à partir de l'intensité de l'onde lumineuse de référence estimée ($\hat{I}_{ref,k}$) et de l'intensité de l'onde lumineuse transmise (14), le ratio correspondant à une atténuation ($att_k$) de l'onde lumineuse incidente (12) par l'échantillon (13).

11. Procédé selon la revendication 10, dans lequel l'échantillon (13) comporte une espèce gazeuse ($G_s$) apte à atténuer une partie de l'onde lumineuse incidente, le procédé comportant, lors de l'étape vii), une estimation d'une quantité ($\hat{C}_{s,k}$) de ladite espèce gazeuse dans l'échantillon, à chaque instant de mesure, à partir de l'atténuation déterminée lors de l'étape vi) audit instant de mesure.

12. Dispositif (1) pour analyser un échantillon gazeux, le dispositif comportant :

- une source lumineuse (11) apte à émettre une onde lumineuse incidente (12) se propageant vers l'échantillon ;

- un photodétecteur de mesure (20), apte à détecter une onde lumineuse transmise (14) par l'échantillon, à différents instants de mesure, l'onde lumineuse transmise résultant d'une interaction de l'onde lumineuse incidente (12) avec l'échantillon (13) ;

- un photodétecteur de référence ($20_{ref}$), configuré pour détecter une onde lumineuse de référence ($12_{ref}$) émise par la source de lumière (11), aux différents instants de mesure, l'onde lumineuse de référence étant représentative d'une onde lumineuse atteignant le photodétecteur de référence sans interaction avec l'échantillon; ;

- un premier processeur (30), pour estimer une intensité de l'onde lumineuse de référence ($\hat{I}_{ref,k}$) aux différents instants de mesure, à partir de l'onde lumineuse de référence ($12_{ref}$) détectée par le photodétecteur de référence ($20_{ref}$) auxdits instants de mesure, le premier processeur étant configuré pour mettre en œuvre l'étape v) du procédé objet de l'une quelconque des revendications 1 à 11 ;

- un deuxième processeur (30') pour comparer, à chaque instant de mesure, l'onde lumineuse de référence ($12_{ref}$) et l'onde lumineuse (14) transmise par l'échantillon, aux différents instants de mesure, à partir de l'intensité de l'onde lumineuse de référence ($\hat{I}_{ref,k}$) estimée par le premier processeur (30) à chaque instant de mesure, et d'une intensité ($I_k$) de l'onde lumineuse transmise (14) détectée par le photodétecteur de mesure (20), le deuxième processeur étant programmé pour mettre en oeuvre l'étape vi) du procédé objet de l'une quelconque des revendications 1 à 11.

13. Dispositif (1) pour analyser un échantillon gazeux, selon la revendication 12, dans lequel le premier processeur (30) et le deuxième processeur (30') sont confondus.

**Patentansprüche**

1. Verfahren zur Analyse einer gasförmigen Probe (13) durch Vergleich zwischen einer auf die Probe einfallenden Lichtwelle (12) und einer von der Probe übertragenen Lichtwelle (14), wobei das Verfahren die folgenden Schritte umfasst:

   i) Beleuchtung der Probe (13) durch eine Lichtquelle (11), wobei die Lichtquelle die einfallende Lichtwelle (12) emittiert, die sich bis zur Probe ausbreitet;
   ii) Detektion, durch einen Photodetektor, den sogenannten Messphotodetektor (20), einer von der Probe übertragenen Lichtwelle (14), wobei die übertragene Lichtwelle aus einer Interaktion der einfallenden Lichtwelle mit der Probe resultiert;
   iii) Detektion einer Lichtwelle, der sogenannten Referenzlichtwelle ($12_{ref}$), durch einen Referenzphotodetektor ($20_{ref}$), wobei die Referenzlichtwelle ($12_{ref}$) von der Lichtquelle (11) emittiert wird, wobei die Referenzlichtwelle für eine Lichtwelle repräsentativ ist, die den Referenzphotodetektor ohne Interaktion mit der Probe erreicht;
   iv) iterative Wiederholung der Schritte i) bis iii) zu verschiedenen Zeitpunkten (k), den sogenannten Messzeitpunkten;

wobei das Verfahren **dadurch gekennzeichnet ist, dass** es außerdem umfasst:

   v) anhand jeder Referenzlichtwelle ($12_{ref}$), die in den verschiedenen Schritten iii) detektiert wurde, zu jedem Messzeitpunkt, Schätzung einer Intensität ($\hat{I}_{ref,k}$) der Referenzlichtwelle ($12_{ref}$) zu den Messzeitpunkten, indem die folgenden Teilschritte durchgeführt werden:

      b) Schätzung der Intensität der Referenzlichtwelle ($\hat{I}_{ref,k|k-1}$) zu einem Messzeitpunkt (k) in Abhängigkeit von der Anfangsintensität ($I_{ref,k=0}$) oder von einer Schätzung der Intensität ($\hat{I}_{ref,k-1}$) der Referenzlichtwelle zu einem früheren Messzeitpunkt (k-1);
      c) Messung der Intensität ($I_{ref,k}$) der Referenzwelle (12), die zum Messzeitpunkt detektiert wurde;
      d) Aktualisierung der Schätzung der Intensität der Referenzlichtwelle ($\hat{I}_{ref,k}$) zum Messzeitpunkt in Abhängigkeit von der im Teilschritt c) gemessenen Intensität ($I_{ref,k}$) und von der im Teilschritt b) geschätzten Intensität ($\hat{I}_{ref,k|k-1}$);
      e) iterative Wiederholung der Schritte b) bis d) auf der Basis der im Teilschritt d) erhaltenen Schätzung der Intensität der Referenzlichtwelle ($\hat{I}_{ref,k}$) durch Inkrementieren des Messzeitpunktes;

   vi) Berücksichtigung der geschätzten Intensität der Referenzlichtwelle ($\hat{I}_{ref,k}$) zu jedem Messzeitpunkt, die aus Schritt v) resultiert, und einer Intensität ($I_k$) der in Schritt ii) detektierten übertragenen Lichtwelle (14), um einen Vergleich ($att_k$), zu jedem Messzeitpunkt, anhand der Referenzlichtwelle ($12_{ref}$) und der von der Probe (13) übertragenen Lichtwelle (14) vorzunehmen;
   vii) Analyse der gasförmigen Probe (13) in Abhängigkeit von dem in Schritt vi) vorgenommenen Vergleich.

2. Verfahren nach Anspruch 1, wobei der Schritt v) einen Teilschritt a) der Bestimmung einer Anfangsintensität ($I_{ref,k=0}$) der Referenzlichtwelle ($12_{ref}$) umfasst.

3. Verfahren nach Anspruch 2, wobei der Teilschritt a) eine Detektion, durch den Referenzphotodetektor ($20_{ref}$), der Referenzlichtwelle (12ref) während einer Initialisierungsperiode umfasst

**4.** Verfahren nach Anspruch 3, wobei der Teilschritt a) die folgenden Phasen umfasst:

ai) Detektion der Referenzlichtwelle ($12_{ref}$) zu mehreren Zeitpunkten, den sogenannten vorbereitenden Zeitpunkten ($p$), während der Initialisierungsperiode und Messung der Intensität ($I_p$) der zu jedem vorbereitenden Zeitpunkt detektierten Referenzlichtwelle;

aii) Bestimmung der Anfangsintensität ($I_{ref,k=0}$) aus einem Mittelwert oder einem Median der in der Phase ai) gemessenen Intensitäten.

**5.** Schätzverfahren nach einem der vorhergehenden Ansprüche, wobei der Teilschritt b) die Schätzung eines Zustandsvektors ($\hat{x}_k$) zu jedem Messzeitpunkt ($k$) umfasst, wobei der Zustandsvektor eine Schätzung ($\hat{I}_{ref,k}$) der Intensität der zu dem Messzeitpunkt detektierten Referenzlichtwelle umfasst.

**6.** Schätzverfahren nach Anspruch 5, wobei der Zustandsvektor ($\hat{x}_k$) außerdem einen Term ($\hat{d}_k$) umfasst, der eine Schätzung einer Ableitung der Intensität der Referenzlichtwelle zwischen zwei aufeinander folgenden Messzeitpunkten repräsentiert.

**7.** Schätzverfahren nach einem der Ansprüche 5 oder 6, wobei der Teilschritt b) eine Schätzung des Zustandsvektors ($\hat{x}_k$) zu jedem Messzeitpunkt umfasst, unter Anwendung einer Prädiktionsmatrix ($A$) auf den Zustandsvektor ($\hat{x}_{k-1}$), der zu einem dem Messzeitpunkt vorangehenden Zeitpunkt bestimmt wurde.

**8.** Schätzverfahren nach einem der Ansprüche 5 bis 7, wobei der Teilschritt d) die folgenden Phasen umfasst:

di) Vergleich zwischen der Messung der Referenzintensität ($I_{ref,k}$), die im dem Teilschritt d) vorangehenden Teilschritt c) durchgeführt wurde, und der Schätzung ($\hat{I}_{ref,k|k-1}$), die während des dem Teilschritt d) vorangehenden Teilschritts b) durchgeführt wurde;

dii) Aktualisierung des Zustandsvektors ($\hat{x}_k$) in Abhängigkeit von diesem Vergleich.

**9.** Verfahren nach einem der Ansprüche 5 bis 8, wobei die Teilschritte b) bis d) mithilfe eines rekursiven Schätzers vom Typ eines Kalman-Filters durchgeführt werden.

**10.** Verfahren nach einem der vorhergehenden Ansprüche, wobei die Probe (13) in der Lage ist, einen Teil der einfallenden Lichtwelle (12) zu dämpfen, wobei das Verfahren in Schritt vi) eine Berechnung eines Verhältnisses der geschätzten Intensität der Referenzlichtwelle ($\hat{I}_{ref,k}$) und der Intensität der übertragenen Lichtwelle (14) umfasst, wobei das Verhältnis einer Dämpfung ($att_k$) der einfallenden Lichtwelle (12) durch die Probe (13) entspricht.

**11.** Verfahren nach Anspruch 10, wobei die Probe (13) eine gasförmige Spezies ($G_S$) umfasst, die in der Lage ist, einen Teil der einfallenden Lichtwelle zu dämpfen, wobei das Verfahren in Schritt vii) eine Schätzung einer Menge ($\hat{C}_{s,k}$) der gasförmigen Spezies in der Probe zu jedem Messzeitpunkt anhand der in Schritt vi) bestimmten Dämpfung zu jedem Messzeitpunkt umfasst.

**12.** Vorrichtung (1) zum Analysieren einer gasförmigen Probe, wobei die Vorrichtung aufweist:

- eine Lichtquelle (11), die in der Lage ist, eine einfallende Lichtwelle (12) zu emittieren, die sich in Richtung der Probe ausbreitet;
- einen Messphotodetektor (20), der in der Lage ist, eine von der Probe übertragene Lichtwelle (14) zu verschiedenen Messzeitpunkten zu detektieren, wobei die übertragene Lichtwelle aus einer Interaktion der einfallenden Lichtwelle (12) mit der Probe (13) resultiert;
- einen Referenzphotodetektor ($20_{ref}$), der dafür ausgelegt ist, eine von der Lichtquelle (11) emittierte Referenzlichtwelle ($12_{ref}$) zu den verschiedenen Messzeitpunkten zu detektieren, wobei die Referenzlichtwelle für eine Lichtwelle repräsentativ ist, die den Referenzphotodetektor ohne Interaktion mit der Probe erreicht;
- einen ersten Prozessor (30) zum Schätzen einer Intensität der Referenzlichtwelle ($\hat{I}_{ref,k}$) zu den verschiedenen Messzeitpunkten anhand der Referenzlichtwelle ($12_{ref}$), die von dem Referenzphotodetektor ($20_{ref}$) zu den Messzeitpunkten detektiert wurde, wobei der erste Prozessor dafür ausgelegt ist, den Schritt v) des Verfahrens nach einem der Ansprüche 1 bis 11 auszuführen;
- einen zweiten Prozessor (30') zum Vergleichen, zu jedem Messzeitpunkt, der Referenzlichtwelle ($12_{ref}$) und der von der Probe zu den verschiedenen Messzeitpunkten übertragenen Lichtwelle (14) anhand der von dem ersten Prozessor (30) zu jedem Messzeitpunkt geschätzten Intensität der Referenzlichtwelle ($\hat{I}_{ref,k}$) und einer Intensität ($I_k$) der von dem Messphotodetektor (20) detektierten übertragenen Lichtwelle (14), wobei der zweite Prozessor dafür programmiert ist, den Schritt vi) des Verfahrens nach einem der Ansprüche 1 bis 11 auszuführen.

**13.** Vorrichtung (1) zum Analysieren einer gasförmigen Probe nach Anspruch 12, wobei der erste Prozessor (30) und der zweite Prozessor (30') zusammenfallen.

## Claims

1. A method for analyzing a gas sample (13), by comparison between a light wave (12) incident on the sample and a light wave (14) transmitted by the sample, the method comprising the following steps:

   i) illuminating the sample (13), with a light source (11), the light source emitting the incident light wave (12), which propagates to the sample;
   ii) detecting, with a photodetector called the measurement photodetector (20), a light wave (14) transmitted by the sample, the transmitted light wave resulting from an attenuation of the incident light wave by the sample;
   iii) detecting a light wave called the reference light wave ($12_{ref}$) with a reference photodetector ($20_{ref}$), the reference light wave ($12_{ref}$) being emitted by the light source (11), the reference light wave being representative of a light wave reaching the reference photodetector without interaction with the sample;
   iv) reiterating steps i) to iii) at various times ($k$), called measurement times;

   the method being **characterized in that** it further comprises :

   v) from each reference light wave ($12_{ref}$) detected in the various steps iii), at each measurement time, estimating an intensity ($\hat{I}_{ref,k}$) of the reference light wave ($12_{ref}$) at said measurement times, by implementing the following substeps:

   b) estimating the intensity of the reference light wave ($\hat{I}_{ref,k|k-1}$) at a measurement time ($k$), depending on an initial intensity ($I_{ref,k=0}$) or an estimation of the intensity ($\hat{I}_{ref,k-1}$) of the reference light wave at a prior measurement time ($k$-1);
   c) measuring the intensity ($\hat{I}_{ref,k}$) of the reference light wave (12) detected at the measurement time;
   d) updating the estimation of the intensity ($\hat{I}_{ref,k}$) of the reference light wave at the measurement time, depending on the intensity ($I_{ref,k}$) measured in substep c) and the intensity ($\hat{I}_{ref,k|k-1}$) estimated in substep b);
   e) reiterating steps b) to d), on the basis of the estimation of the intensity ($\hat{I}_{ref,k}$) of the reference light wave obtained in substep d), while incrementing the measurement time;

   vi) taking into account the intensity ($\hat{I}_{ref,k}$) of the reference light wave estimated, at each measurement time, i.e. the estimated intensity resulting from step v), and an intensity ($I_k$) of the transmitted light wave (14) detected in step ii) in order to perform a comparison ($att_k$), at each measurement time, based on the reference light wave ($12_{ref}$) and on the light wave (14) transmitted by the sample (13);
   vii) analyzing the gas sample (13) depending on the comparison performed in step vi).

2. The method as claimed in claim 1, wherein step v) comprises a substep a) of determining an initial intensity ($I_{ref,k=0}$) of the reference light wave ($12_{ref}$).

3. The method as claimed in claim 2, wherein substep a) comprises detecting, with the reference photodetector ($20_{ref}$), the reference light wave ($12_{ref}$) during an initialization period.

4. The method as claimed in claim 3, wherein substep a) comprises the following phases:

   ai) detecting the reference light wave ($12_{ref}$) at a plurality of times called preliminary times ($p$), during the initialisation period, and measuring the intensity ($I_p$) of the reference light wave detected at each preliminary time;
   aii) determining the initial intensity ($I_{ref,k=0}$) from a mean or a median of the intensities measured in phase ai).

5. The estimating method as claimed in any one of the preceding claims, wherein substep b) comprises estimating a state vector ($\hat{x}_k$), at each measurement time ($k$), the state vector comprising an estimation ($\hat{I}_{ref,k}$) of the intensity of the reference light wave detected at said measurement time.

6. The estimating method as claimed in claim 5, wherein the state vector ($\hat{x}_k$) also comprises a term ($\hat{d}_k$) representing an estimation of a drift in the intensity of the reference light wave between two successive measurement times.

7. The estimating method as claimed in either one of claims 5 and 6, wherein substep b) comprises estimating the state vector ($\hat{x}_k$) at each measurement time, by applying a prediction matrix ($A$) to the state vector ($\hat{x}_{k-1}$) determined at a time preceding the measurement time.

8. The estimating method as claimed in any one of claims 5 to 7, wherein substep d) comprises the following phases:

   di) performing a comparison between the measurement of the reference intensity ($I_{ref,k}$) carried out in substep c) preceding substep d) and the estimation ($\hat{I}_{ref,k|k-1}$) made in the substep b) preceding substep d);
   dii) updating the state vector ($\hat{x}_k$) depending on

said comparison.

9. The method as claimed in any one of claims 5 to 8, wherein substeps b) to d) are implemented using a recursive estimator of the Kalman-filter type.

10. The method as claimed in any one of the preceding claims, wherein the sample (13) is able to attenuate one portion of the incident light wave (12), the method comprising, in step vi), calculating a ratio from the estimated intensity ($\hat{I}_{ref,k}$) of the reference light wave and the intensity of the transmitted light wave (14), the ratio corresponding to the attenuation ($att_k$) of the incident light wave (12) by the sample (13).

11. The method as claimed in any one of the preceding claims, wherein the sample (13) comprises a gaseous species ($G_s$) able to attenuate one portion of the incident light wave, the method comprising, in step vii), estimating an amount ($\hat{C}_{s,k}$) of said gaseous species in the sample, at each measurement time, from the attenuation determined in step vi) at said measurement time.

12. A device (1) for analyzing a gas sample, the device comprising:

- a light source (11) able to emit an incident light wave (12) that propagates toward the sample;
- a measurement photodetector (20), able to detect a light wave (14) transmitted by the sample, at various measurement times, the transmitted light wave resulting from an interaction of the incident light wave (12) with the sample (13);
- a reference photodetector ($20_{ref}$), configured to detect a reference light wave ($12_{ref}$) emitted by the light source (11), at various measurement times, the reference light wave being representative of a light wave reaching the reference photodetector without interaction with the sample;
- a first processor (30), for estimating an intensity ($\hat{I}_{ref,k}$) of the reference light wave at the various measurement times, from the reference light wave ($12_{ref}$) detected by the reference photodetector ($20_{ref}$) at said measurement times, the first processor being configured to implement step v) of the method that is the subject of any one of claims 1 to 11;
- a second processor (30') for comparing, at each measurement time, the reference light wave ($12_{ref}$) and the light wave (14) transmitted by the sample, at the various measurement times, from the intensity ($\hat{I}_{ref,k}$) of the reference light wave estimated by the first processor (30) at each measurement time, and from an intensity ($I_k$) of the transmitted light wave (14) detected by the measurement photodetector (20), the second processor being programmed to implement step vi) of the method that is the subject of any one of claims 1 to 11.

13. The device (1) for analyzing a gas sample, as claimed in claim 12, wherein the first processor (30) and the second processor (30') are one and the same.

**Fig. 1A**

**Fig. 1B**

**Fig. 1C**

**Fig. 2A**

**Fig. 2B**

**Fig. 3A**

**Fig. 3B**

**Fig. 3C**

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5026992 A
- WO 2007064370 A
- FR 2931555
- US 2010091278 A
- FR 3022633
- EP 0729727 A

**Littérature non-brevet citée dans la description**

- **LELEUX.** Applications of Kalman filtering to real-time trace gaz concentration measurements. *Appl. Phys. B,* 2002, vol. 74, 85-93
- **RIRIS H.** Kalman filtering of tunable diode laser spectrometer absorbance measurements. *Appl. Optics,* 20 Août 1994, vol. 33 (24